# EUROPEAN PATENT APPLICATION

(11) **EP 0 851 368 A2**
(43) Date of publication of application: **01.07.1998**
(21) Application number: 97310129.8
(22) Date of filing: 16.12.1997
(51) Int. Cl.: G06F 17/30

(54) **Self-teaching advanced search specification**

(30) Priority: 26.12.1996 US 780146; 13.01.1997 US 785142
(71) Applicant: SUN MICROSYSTEMS, INC., Palo Alto, California 94303 (US)
(72) Inventor: Nielsen, Jakob, Atherton, California 94027 (US); Genter, Donald R., Palo Alto, California 94301 (US); Hardee, Martin E., San Carlos, California 94070 (US); Samuelsson, Leif, San Carlos, California 94070 (US); Ede, Meghan R., San Francisco, California 94131 (US)
(74) Representative: Read, Matthew Charles

(57) **Abstract**

A graphical user interface (GUI) for a text search system includes text entry fields and menus of operators from which a search query is composed. The actual search query submitted to a search engine is a single string of text and operators arranged in accordance with the search syntax in use. The actual search query is also displayed on the GUI and permits a user to learn how the system interprets the entries in the fields and selections from the menus as they are entered or changed. The displayed search query is also editable and changes in the overall search query are reflected back into the text entry fields and operators from which it was composed. Thus a user can compose a search query using either form fill out or text editing.

## Description

### BACKGROUND OF THE INVENTION

### Field of the Invention

The invention relates to computer systems, and, more particularly, to a graphical user interface for text information retrieval systems.

### Description of Related Art

Full text search systems are well known in the art. A large database of textual information can be accessed by submitting a textual query and the computer controlling the database will locate documents satisfying that query.

Search queries can typically be divided into simple search and advanced searches, where a simple search involves typing one or more words into a query field without any further indication of what should be done with the words and an advanced search provides additional features to specify the interpretation of the words. Examples of advanced search features include a Boolean search (search for "dog AND cat," search for "dog OR cat"), a string search ("good dog" will only match the words good and dog if they appear with a single space between them), a case-sensitive/insensitive search ("dog" may or may not match "Dog"), and the ability to match partial words ("dog" will match "dogs" if partial matches are allowed). Search systems also include many more features.

Many search user interfaces allow the user to specify advanced search queries by a special query syntax. For example, the string "("Good Boy" OR "Good Girl") BUT NOT (Bad Dog)" might be the query syntax for a search to match documents that contained at least one of the exact strings "Good Boy or "Good Girl" but neither of the words "Bad" or "Dog".

The advantage of a single string search syntax is that the user can type a query into a single text entry field and that search strings can be copied and pasted and shown in pull down or pop-up menus (e.g., a history list of previous searches). The distinct downside is that the syntax is difficult to learn for the user. Learning difficulties become particularly problematic when users have to interact with multiple search engines as is typically the case when using the World Wide Web (WWW).

In order to avoid a single string search syntax, some search user interfaces replace the search string with a graphical user interface. A search Graphical User Interface (GUI) makes it simple for users to specify advanced search queries through the use of menus and buttons that explicitly describe the available options. The downside of a search GUI is that users cannot easily save, reuse, or email queries or perform other text-based operations on their queries.

Almost all search systems provide a single string based search syntax. Search GUIs are less common but exist in several systems.

### The Problems

Thus, the prior art typically has a string based search syntax which is difficult to compose, both from the standpoint of remembering which operators are available and from a standpoint of how search strings and operators are combined to do useful work on the search system.

Because of the difficulties of the string based search syntax, the commands for searching a particular information retrieval system are difficult to learn. Nevertheless, a full range of search capabilities require the richness of operators and commands in order to exploit the full power of the search system.

Graphical user interfaces of the prior art trade off ease of use, sacrificing the richness of the full command set. Further, graphical user interfaces of the prior art do not permit a user to easily save, reuse or otherwise perform text processing on their queries or their previous queries.

### SUMMARY OF THE INVENTION

The invention is directed to a graphical user interface which permits the user to quickly learn search syntax by getting feedback on how the system interprets the search strings and operators selected by the user in a graphical user interface.

One advantage achieved by the invention is that a user can perform text processing on a text string which constitutes the system's interpretation of entries into fields and selections from menus in a graphical user interface.

Another advantage achieved by the invention is that a user can work selectively with the graphical user interface entry fields and menus or with the search string constructed from those entry fields and menus in a more experienced mode, or may work selectively in both modes and the entries made in one mode will be reflected automatically in the other mode.

The invention is related to apparatus for carrying out a search of a database, including: a computer, having a search process for searching said database, configured to send a graphical user interface to a user device, said graphical user interface including text entry and/or operator components and a single string interpretation of a text query formulated using said components of said graphical user interface, and a user device, including a display, connected to said computer for displaying said graphical user interface.

The invention also relates to a method of composing a search query, by displaying a graphical user interface containing text entry fields and operator selection menus, and converting contents of the text entry fields and operators selected into a system interpretation for display to a user of how the system interprets any entries in the text entry fields and operator selections.

The invention is also related to a method, in a system for providing text searches over a network having at least one search computer providing search services connected to the network and at least one user terminal connected to said network and configured to connect to a search computer, for downloading a graphical user interface from a search computer to a user terminal.

The invention is also directed to a system for providing text searches over a network, including: a user terminal connected to said network, and a search computer connected to said network configured to download a graphical user interface to said user terminal.

The invention is also directed to computer program products containing computer programs for carrying out aspects of the invention.

Still other objects and advantages of the present invention will become readily apparent to those skilled in the art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawing and description are to be regarded as illustrative in nature, and not as restrictive.

### BRIEF DESCRIPTION OF DRAWINGS

**Figure 1** is an illustration of a network over which terminals can connect to a host and over which a client process can connect to a server process.
**Figure 2** represents an exemplary graphical user interface in accordance with the invention.
**Figure 3** is the representation of **Figure 2** with variable names associated with respective fields and operators.
**Figure 4** is an exemplary memory layout for use in organizing, processing, and storing information from the graphical user interface in carrying the invention.
**Figure 5** is a high level flow chart of an exemplary text search carried out in accordance with the invention.
**Figure 6** is an exemplary flow chart showing how an applet can be used to initiate a search at a server process from a client process.
**Figure 7** is a flow chart of an exemplary process by which text is entered or edited in the search string fields of a graphical user interface.
**Figure 8** is a flow chart of an exemplary process by which boolean operators or the like are selected for a search.
**Figure 9** is a flow chart of an exemplary process for interpreting text entered into a search string field.
**Figure 10** is a flow chart of an exemplary process for deriving a system interpretation from search strings and operator specified by a user.
**Figure 11** is an exemplary process for a reverse system interpretation.
**Figure 12** is a flow chart of a process for converting an overall_system_interpretation into its constituent parts in the graphical user interface (reverse GUI update) for use in the process of **Figure 11**.
**Figure 13** is a flow chart of a process used to display a pull down menu of N previous queries which have presented to the search system.
**Figure 14** is a flow chart of an exemplary process for submitting a search request using a graphical user interface in accordance with the invention.
**Figure 15** is a flow chart of an exemplary process for showing how an html document can be used, instead of an applet, to initiate a search at a server process from a client process.
**Figure 16A** is an example of a store computer suitable for use in accordance with the invention.
**Figure 16B** is a block diagram of the construction of a store computer of **Figure 16A**.
**Figure 16C** illustrates an exemplary memory medium usable with the store computer of **Figure 16A**.

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or similar devices.

The present invention also relates to apparatus for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

HTML stands for *hypertext markup language.* It is a computer language that controls the appearance and behavior of Web documents. It is discussed more hereinafter.

Modern programming environments have evolved which permit executable code objects to be delivered across a network to a computer and executed on that computer. Such executable code objects are called applets. Applets are discussed more hereinafter.

### DESCRIPTION OF THE PREFERRED EMBODIMENT

When using this invention, the user first specifies an advanced query using a GUI drawing. The exact design of the GUI depends on the features supported by the underlying search engine but will typically at a minimum include pull down menus or radio buttons for boolean search operators (AND, OR, NOT).

In a preferred embodiment, the GUI has an additional text field labeled something like "System Interpretation of Your Detailed Find Query". As the user types text into the entry fields of the GUI and/or changes the settings of the menus and buttons, the system puts its interpretation of the resulting search in the appropriate search syntax into the system interpretation field. If, for example, the user was to change the option menu between the Good Boy field and the Good Girl field from OR to AND, the system would immediately replace the characters OR in the system interpretation field with the characters AND.

Note that this embodiment of the invention requires local computation, if performed in a client server environment and thus requires an applet (preferably a Java applet) to compute the proper search syntax as the user manipulates the GUI form.

The main environment in which applets are developed and run is the Java environment. Java is both a language and an environment that supports several different kinds of applications, namely:

| |
|---|
| APPLETS |
| STAND-ALONE APPLICATIONS |
| CONTENT HANDLERS |
| PROTOCOL HANDLERS |

Applets and applications provide user functionality. The handlers provide an encapsulation system of the underlying system and network calls providing the applets and applications with a consistent interface in a constantly changing hardware environment.

The Java technology is actually a group of technologies:

| |
|---|
| The language for developing the code necessary for applications |
| The architecture for running the applications that have been developed |
| The tools necessary to build, compile and run those applications |

The Java tools incorporate the Java browser, Java interpreter, and Java compiler along with class libraries to support the programming for these environments. The HotJava browser provides the run-time system necessary for running Java code distributed over the World Wide Web. In addition, it provides the necessary framework for additional protocol and content handlers that content developers can build using Java.

The Java interpreter is the stand-alone run-time system for Java applications. It can be used for running platform independent code on a variety of machines in a robust, high-performance manner. The Java compiler allows programmers to develop the machine-independent Java bite code necessary for running under the browser and in interpreter environments.

When one compiles Java code, the compiler outputs what is known as Java Bytecode. This bytecode is executable code for a specific machine, the Java virtual machine, which does not exist, at least in silicon. The Java machine executable code is then run through an interpreter on the actual hardware which converts the code to the target hardware and executes it. By compiling code for the virtual machine, all code is guaranteed to run on any computer that has the interpreter ported to it.

The difference between a stand-alone application and an applet consists essentially of what services the program expects to find. These services can be provided in either the interpreter or browser environments. When an instance of a subclass of applet is created inside a browser, the browser itself provides the class with information about the display context, mouse and keyboard events and so on. Applets are always derived from the applet class itself and automatically inherit all of the class's functionality.

In the stand-alone application environment, none of this is provided, and the programmer has to create all the functionality provided by a browser when running an applet.

An alternative embodiment that does not require an applet, even when used in a client server environment works as follows: Again, the user is presented with a GUI form with the various advanced search options, but the GUI does not contain a system interpretation field or it contains a blank system interpretation field. When the user has submitted the query and receives the search results, the system adds a line on the top of the search result page or filling in the blank system interpretation field with the string specifying the correct search syntax for the system interpretation of the user's query.

By use of this invention, the user is presented with query strings in the proper search syntax for the specific queries entered by that user. This has several benefits: First, the user can copy and/or save these query strings for later use, and, second, it is much easier for the user to learn the required search syntax when seeing correct samples of the syntax that have been constructed to match the user's own search problems as specified, by the user in the easier GUI interface. If using the preferred embodiment, learning is further enhanced because the user sees the search syntax string being built up gradually as the user adds elements to the search.

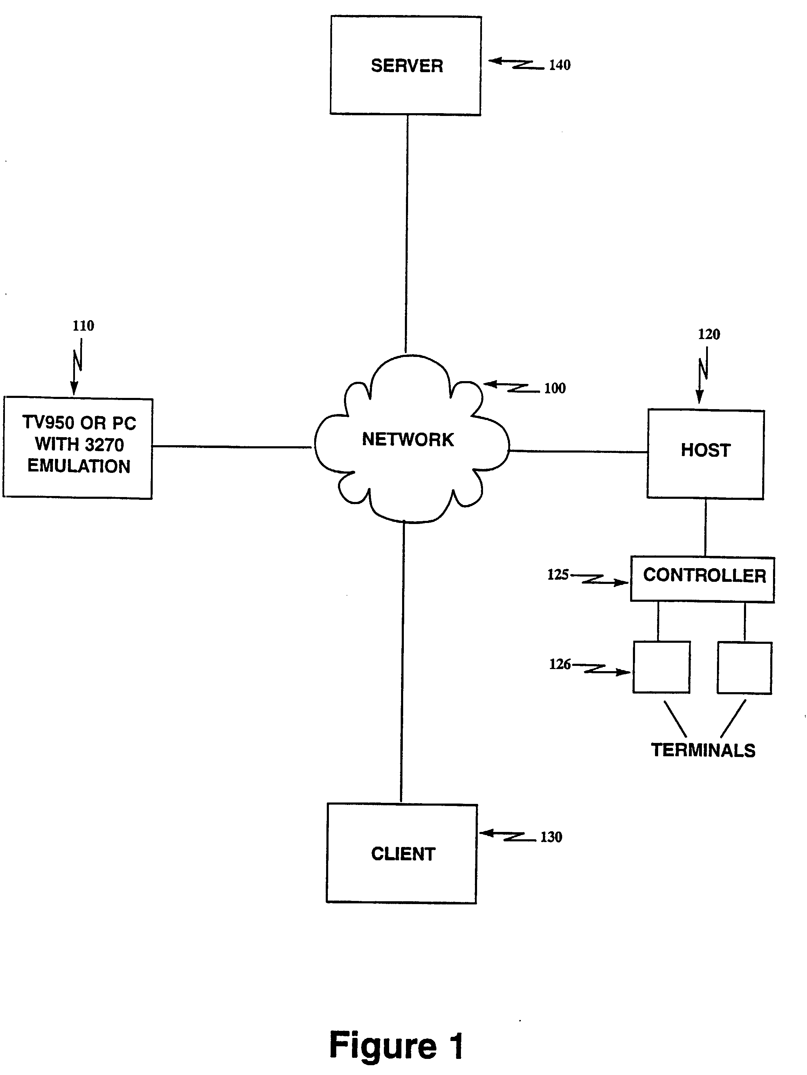

**Figure 1** is an illustration of a network **100** over which terminals **110** can connect to a host **120** and over which a client process **130** can connect to a server **140**. The network can be any kind of a network suitable for connecting computers together. Typically, the network may contain a plurality of services including the ability to receive digital information transmitted over an analog modem or direct digital connections such as X.25 or ISDN. The network **100** is typically arranged hierarchically as, for example, when using a high speed digital national backbone for connecting regional switching centers which connect to local service providers or nodes which connect to individual terminals. Such networks are well known in the art and are found, for example, in implementations of the world wide web. However, network **100** can also be a local area network used, for example within a single company.

There are two dominant types of connection to a search process. In one, a remote terminal, such as terminal **110** is connected over the network to a host **120** which provides processing, storage and other resources required to respond to a search query from a terminal. A host, typically, has local terminals **126** connected to it directly over a controller **125**. In addition, the host may have remote terminals **110** connected to it over a network. A typical host terminal might be a DEC TV950 or a personal computer running, for example, 3270 emulation to make it appear as a dedicated terminal to the host. Another mode of commonly implementing a search process is that shown with respect to client **130** and server **140**. Client server interactions are well known in the prior art and are typically found implemented on the Internet and on the World Wide Web portion of the Internet in particular.

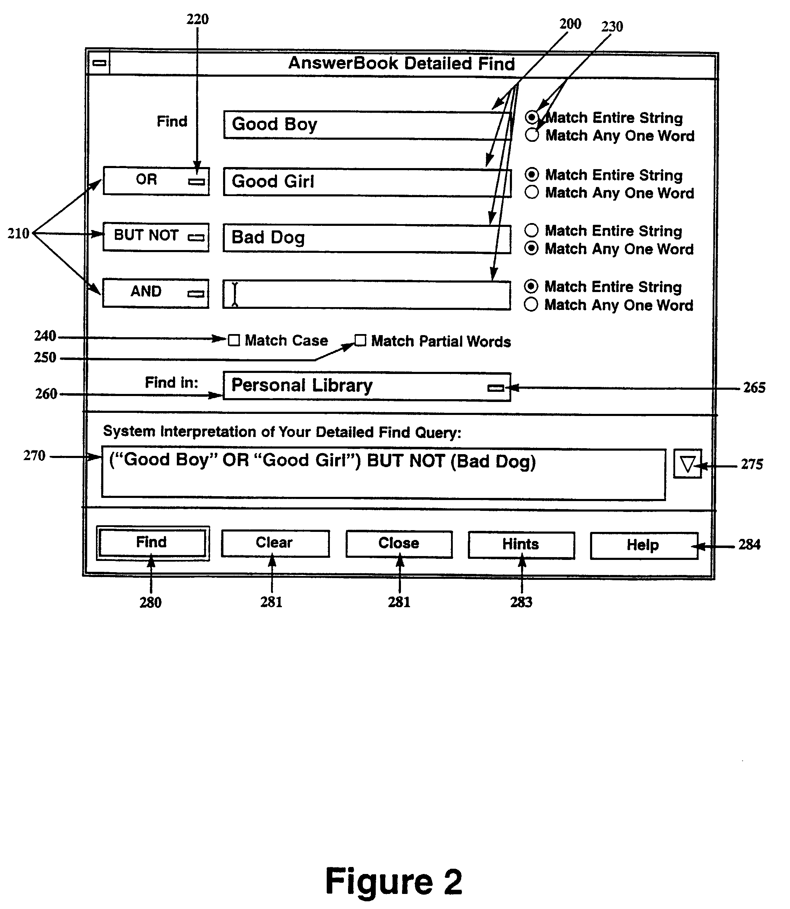

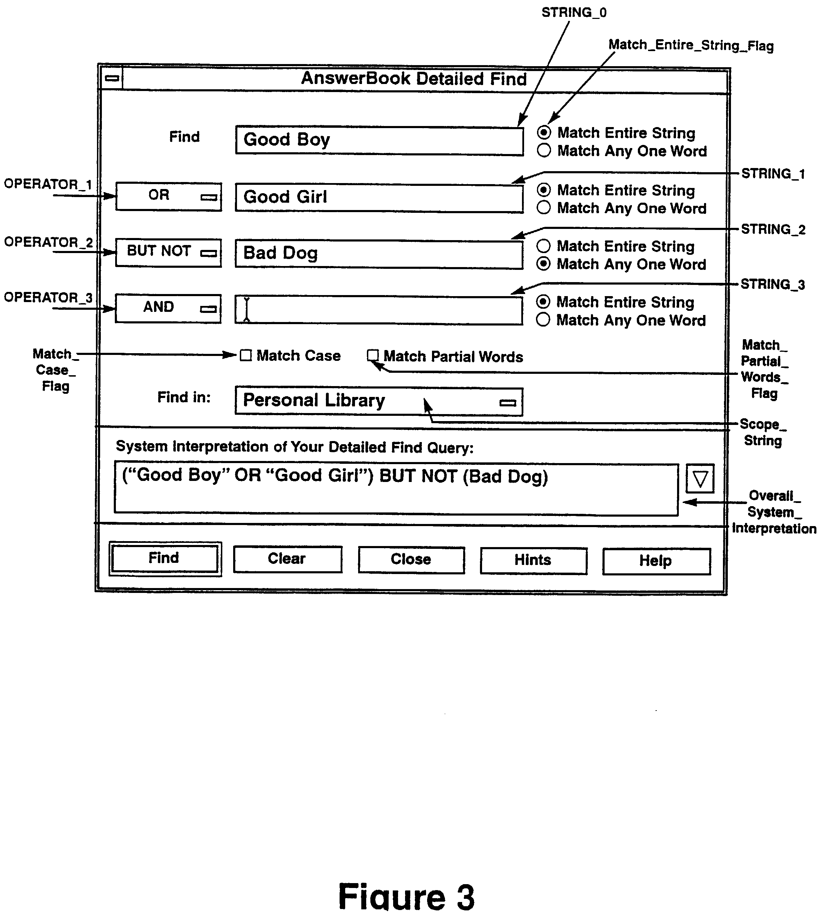

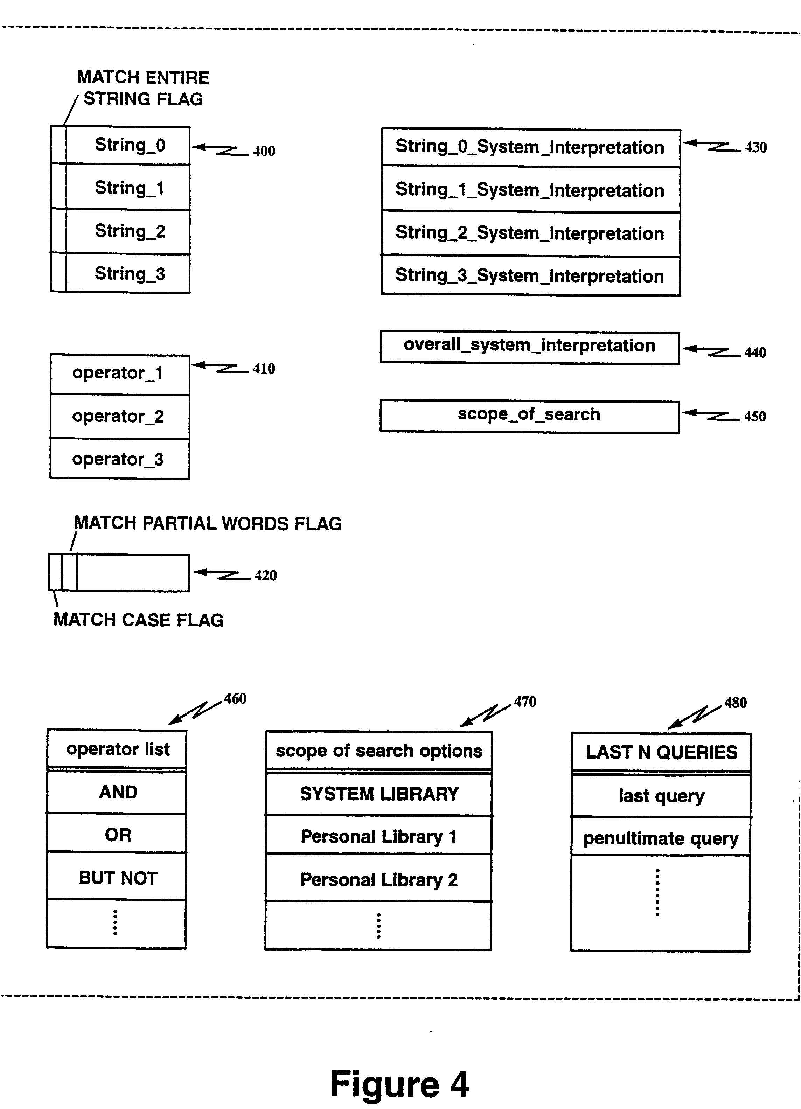

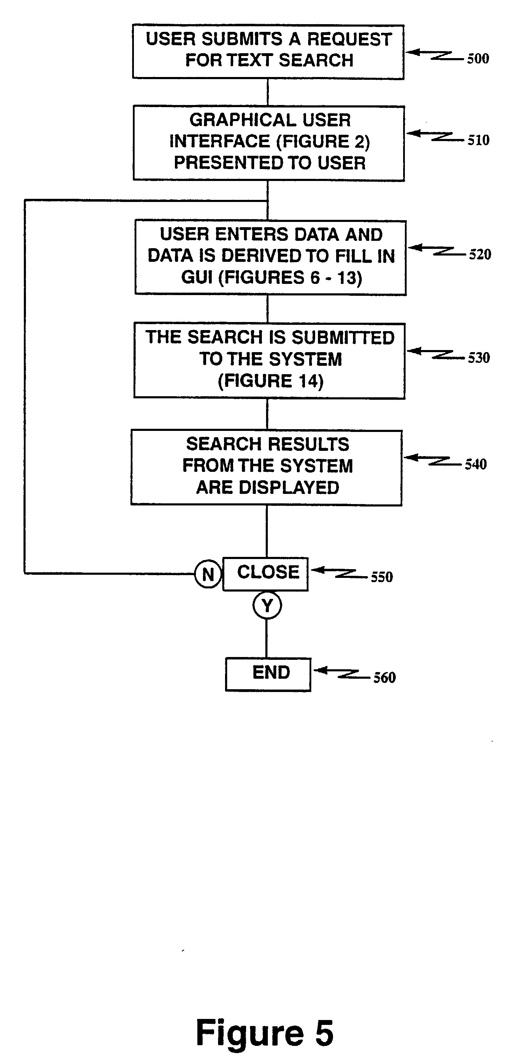

**Figure 2** represents an exemplary graphical user interface in accordance with the invention. The graphical user interface shown in **Figure 2** has a plurality of text entry fields **200** for receiving respective strings of characters for construction of a search. A plurality of operators can be invoked using pull down menu areas **210**. Each memory area **210** contains a display area for displaying the operator currently selected and a pull down memory activation area **220** for activating a pull down menu displaying a list of operators available for expressing relationships between text strings stated in the text fields **200**.

Associated with each text entry field **200** is a toggle **230** which allows the user to specify whether the entire string of characters should be treated as a literal, that is, only characters matching the entire string will trigger a response or whether the text string should be treated as a list of words, with a hit being reported when a document matches any one word of the text string.

Buttons **240** and **250** permit a user to specify whether or not case sensitivity should be used when attempting to match a text string with a text string contained in a document and whether or not words which partially match a word should be considered hits when returning search results, respectively.

Pull down menu **260** represents a list of options for controlling the scope of the search. If the search is unrestricted, it is viewed as a search of the system library. However, a user may create one or more subsets of the system library which are adequate for certain types of search the user may wish to undertake. These personal libraries may be separately identified and stored for selection. The currently selected scope indication is displayed in a display area of pull down menu **260** and the other selections may be viewed by activating the search button **265** shown on the pull down menu area.

As shown in **Figure 2** a system interpretation area is provided for displaying how the system is interpreting or will interpret the combination of text entries and operators specified in the fields and pull down menus above it. In the example shown, the system interprets the string "Good Boy" as a literal because the "match entire string" function is selected. Similarly, the text entry "Good Girl" is treated as a literal. The relationship between "Good Boy" and "Good Girl" is that of a Boolean OR operator. The operator linking the previous text strings with the text string "Bad Dog" is a Boolean BUT NOT operator. Because of a precedence or operator hierarchy and the rules of interpretation imposed by the system, the terms joined by an OR operator are grouped together before invoking a BUT NOT relationship to another text string. Thus, the interpretation shown in system interpretation field **270** represents a combination of the text fields and operators defined above combined in a way that the system requires in order to execute a proper search. As discussed more hereinafter, a use may enter field **270** and engage in text editing and any changes the user makes to the system interpretation field will be reflected back into the respective text entries and operator selections shown above.

Button **275** represents a pull down menu activation for causing a display of previously entered queries which have been submitted to the system. Typically, only a relatively small number, such as 10 or 20 previous searches will be stored. By activating the pull down menu and selecting a previous system interpretation of a text search, the user may replace the current system interpretation with a previously submitted system interpretation and the text fields and operators above will be forced into the conditions appropriate to the system interpretation field retrieved from the pull down menu. The user can then, of course, edit the previously submitted text system interpretation and change it to fit the user's current needs.

A plurality of buttons **280-284** are displayed across the bottom of the graphical user interface. These permit or invoke functionality useful or desirable in carrying out a search.

Button **280** actually submits the system interpretation text string, as discussed more hereinafter, to the search engine for processing. Button **281** activates a process which clears all text entry fields above.

Button **282** represents a close function which permits a user to exit from the search task and to close the graphical user interface. Button **284** activates full help functionality provided by the system.

Hints button **283** contains a much abbreviated version of the help functionality activated by button **284**. Users have shown a preference to not be overloaded by full help information and the use of hints is often found more satisfactory to users.

**Figure 3** is a representation of **Figure 2** with variable names associated with respective fields. The variable names are shown to provide ready reference to the storing of variables in a memory layout described hereinafter and in flow charts describing the computer processes utilized to process information in accordance with the invention.

**Figure 4** is an exemplary memory layout for use in organizing, processing and storing information from the graphical user interface in carrying out the invention. Memory block **400** stores the contents of the text entry fields, and respective sub blocks, as typed in by the user during formulation of a query. A flag is stored with each text string to indicate whether the entire string is to be matched (i.e., whether the string is to be treated as a literal) or whether the string should be treated as a list of individual words. Memory block **410** contains the selected operator for each of the operator pull down menus shown in **Figure 2**. Memory block **420** contains flags to indicate whether or not partial words are to be matched and whether or not case is to be matched, respectively. Memory block **430** contains a partial system interpretation of the strings stored in memory block **400** reflecting whether or not the match entire string flag has been set. Memory block **440** contains a text string which represents the overall system interpretation of the query entered by the user.

Memory block **450** contains a scope of search indication. Memory blocks **460**, **470** and **480** contain the options to be displayed in respective pull down menus when activated by a user. Memory block **460** contains the list of operators from which individual operators are selected and stored in memory block **410**. Memory block **470** contains a list of options from which the scope of search may be selected and stored in memory block **450**. Memory block **480** represents the last N inquiries submitted to the system and may be used to select and edit previously submitted queries.

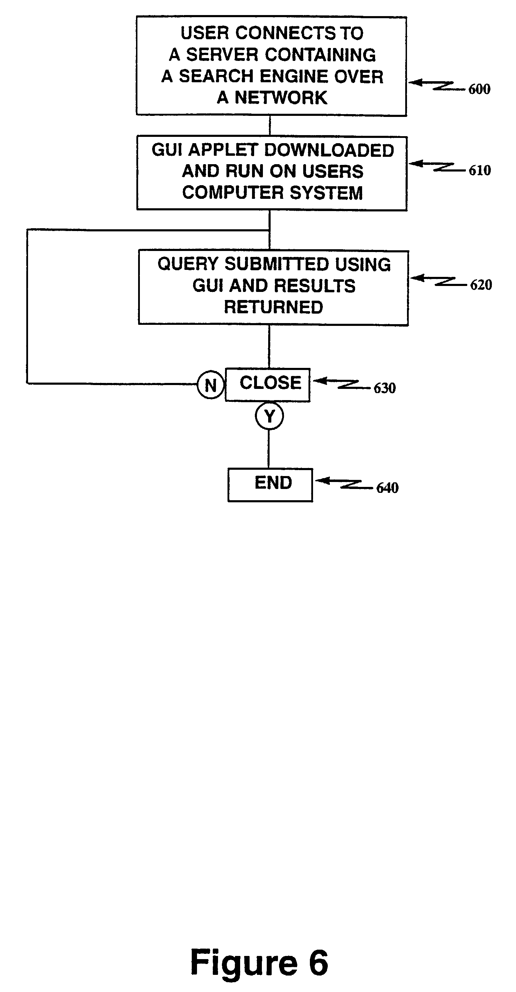

**Figure 5** is a high level flow chart of an exemplary text search carried out in accordance with the invention. When a user submits a request for a text search (**500**), a graphical user interface, as shown for example, in **Figure 2**, is presented to the user (**510**). The user enters the data and the data is derived to fill in the displayed fields in the graphical user interface (**520**). See **Figure 6 - 13**.

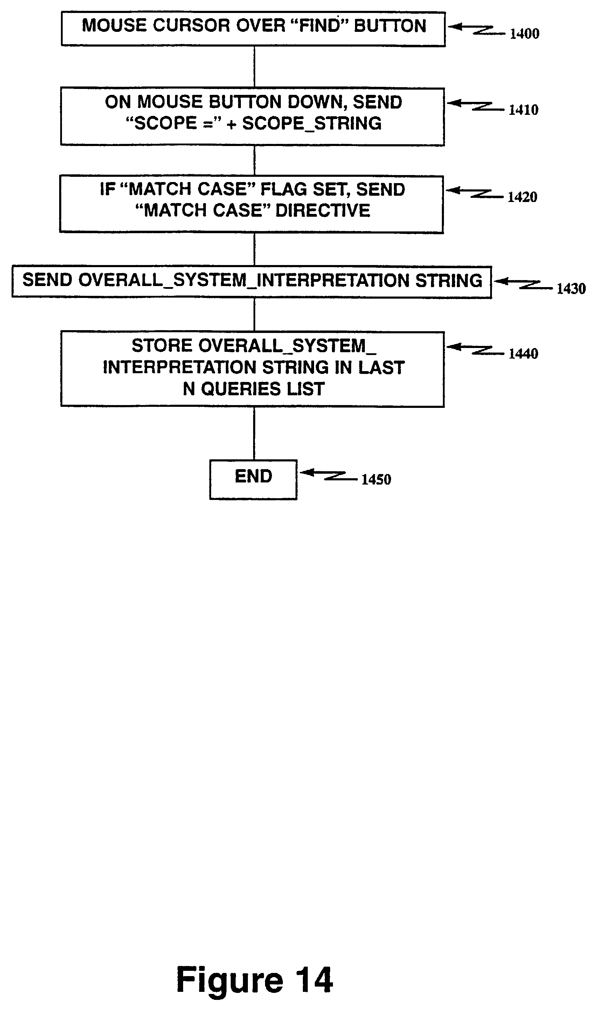

The search query is submitted to the system (**530**) as shown, for example, in **Figure 14**. When search results are received from the search engine of the system, a window is opened for presentation of those search results to the user (**540**). The search results are not required to be presented in a separate window, but such is preferred. A check is made to determine whether or not the user has activated the close button (**550**) and, if the user has (**550-Y**), the process ends (**560**). Otherwise, (**550-N**) the process loops back and begins, provides the user with an opportunity to enter or change the data of the graphical user interface as shown at block **520**.

**Figure 6** is an exemplary chart showing how an applet can be used to initiate a search at a server process from a client process. The user connects to a server containing a search engine over a network (**600**) and the server downloads a GUI applet to the client process and the applet is run on the user's computer system (**610**). When the query is submitted and the results returned using the graphical interface, the user has an option to close the text search process or continue as discussed in conjunction with **Figure 5**.

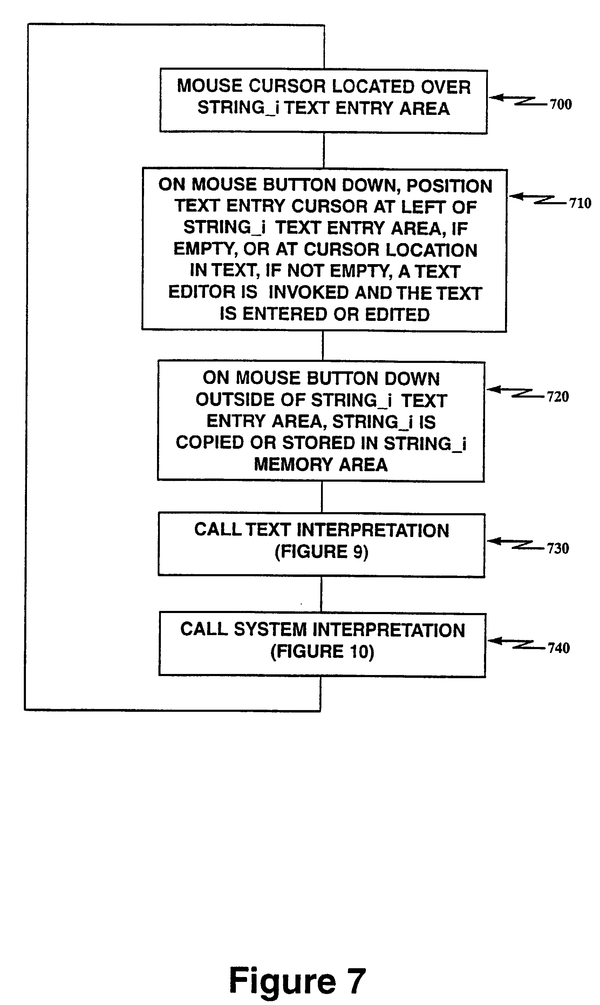

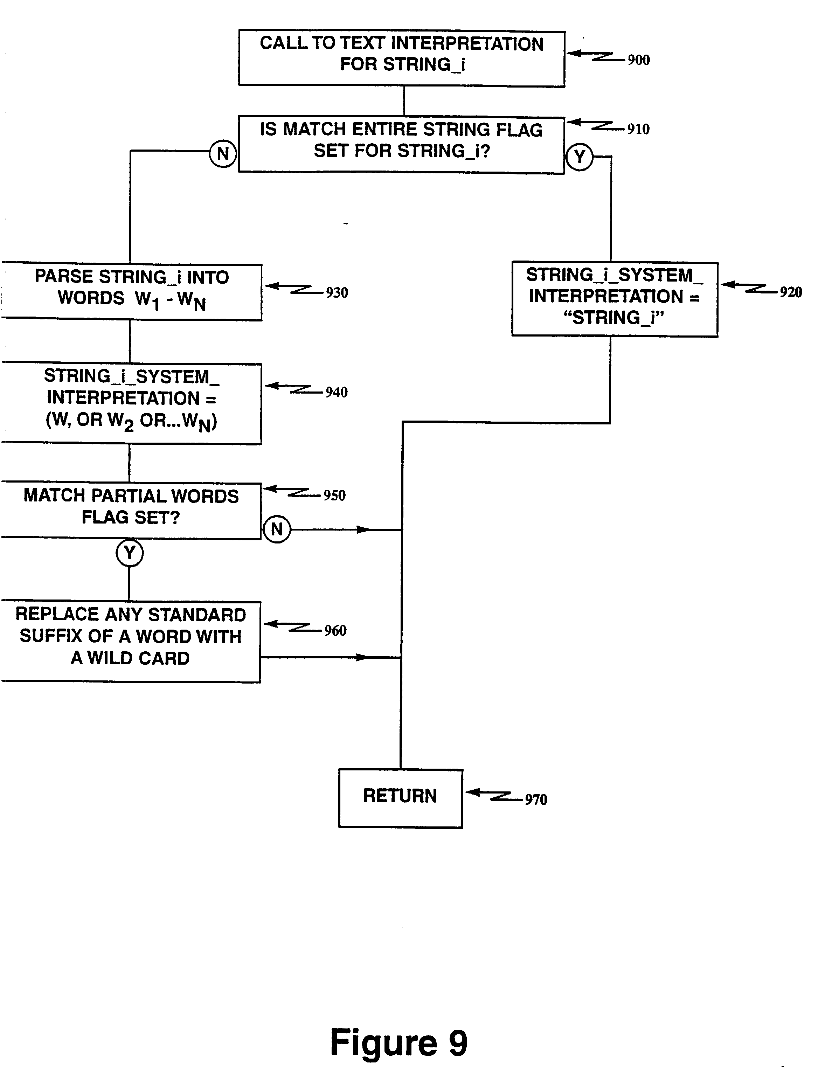

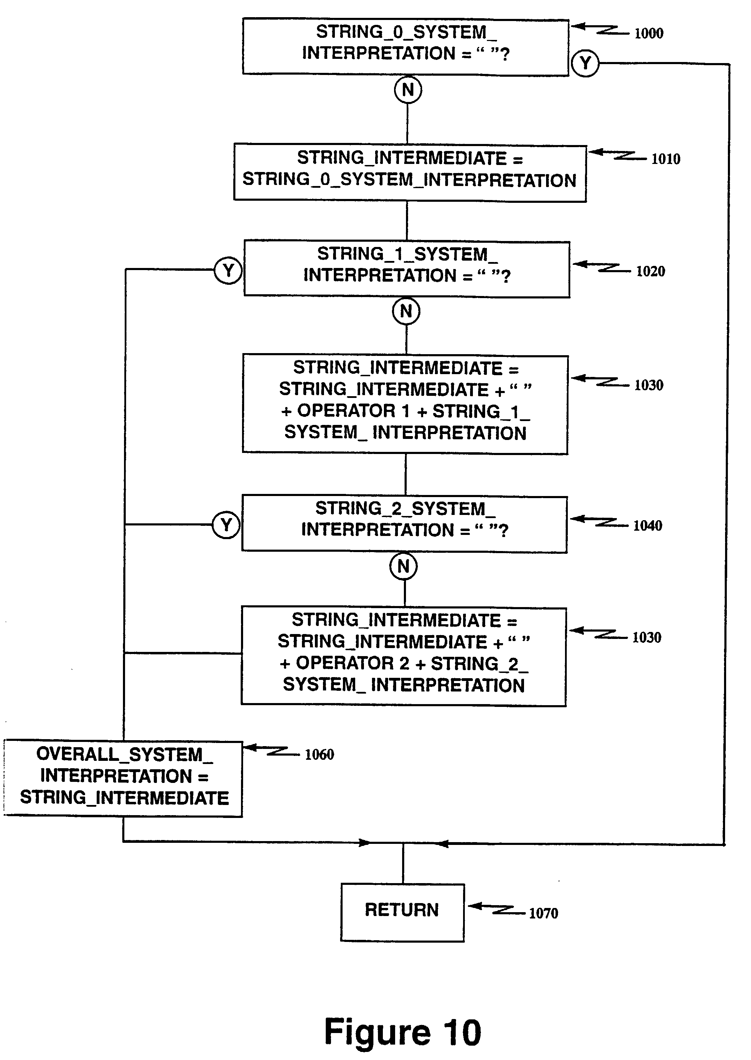

**Figure 7** is a flow chart of an exemplary process by which text is entered or edited in the search string fields of a graphical user interface in accordance with the invention. The location of the mouse cursor is monitored and when the mouse cursor is located over a text entry area, such as that of string_i (**700**), when a mouse button is depressed, a text entry cursor is positioned at the left of the text entry area, if empty, or at the cursor location in the text, if the text entry area is not empty (**710**) and the text is entered or edited (**710**). Subsequently, if a mouse button is depressed when the cursor is outside of the string text entry, the entered or revised text from the text entry area is copied or stored into the string eye memory area (**720**). Then, the text interpretation process shown in **Figure 9** (**730**) is called followed by a call to the system interpretation process shown in **Figure 10** (**740**) and the process loops back to the beginning.

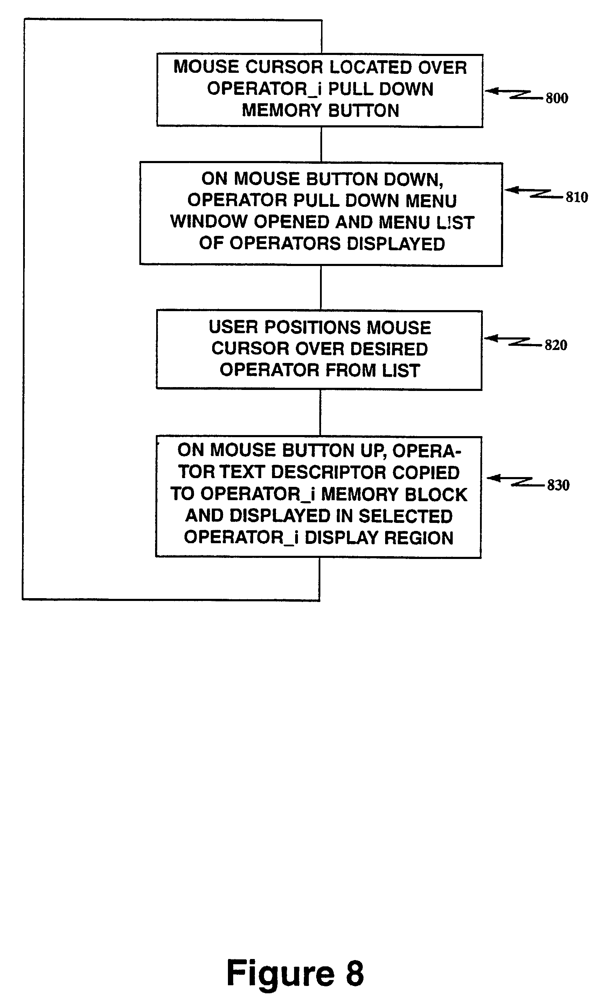

**Figure 8** is a flow chart of an exemplary process by which Boolean operators or the like are selected for a search. The location of the mouse cursor is monitored and when the mouse cursor is located over an operator_i pull down memory button (**800**), if a mouse button is depressed, an operator pull down menu window is opened and a menu list of operators is displayed (**810**). The user positions the mouse cursor over the desired operator from the list (**820**) and when the user releases the mouse button, the operator text descriptor is copied to the operator_i memory block and is displayed in the selected operator_i display region (**830**) and the process repeats.

**Figure 9** is a flow chart of an exemplary process for interpreting text entered into a search string field. The process begins with a call to this process (**900**) indicating the string to be interpreted. A check is made in the string memory block to determine if the "match entire string" flag is set for string_i. If it is (**910-Y**), the literal "string_i" is stored in string_i_system_interpretation field in the memory block **430** and the process returns. If the match entire string flag is not set (**910-N**), string_i is parsed into a plurality of words W₁ - W_{N} (**930**) and the value for the string_i_system interpretation for string_i is set to (W₁ OR W₂ OR ...W_{N} (**940**). If they match partial words flag is not set (**950**), the process returns. However, if it is set (**950-Y**), standard suffixes of a word such as -s, -es, -ed, or -ing are substituted with a wild card character recognized by the search system, such as "*". Note that the parsing of string_i may result in the presence of what would otherwise be considered noise words by the system. Nevertheless, the string is parsed and reported as set forth in block **940** and the search system will eliminate the noise words upon processing of the text string.

**Figure 10** is a flow chart of an exemplary process for deriving a system interpretation from search strings and operators specified by a user. The purpose of the process described in **Figure 10** is to build the overall system interpretation screen displayed in field **270** of **Figure 2**. It does this by appropriately concatenating the system interpretation of the various search strings and the selected operators. The list of operators and operator descriptors are stored as text strings. Turning to **Figure 10**, at block **1000**, if there is no text in the first block the (string_0 block) (**1000-y**), the process returns. If text is available, an intermediate string variable is set equal to the value of the text in the string 0 system interpretation variable (**1010**). A check is then made to determine whether the string_1_system interpretation variable is empty of characters (**1020**). If it is, then the only search text to be utilized is that found in the string_0_system_interpretation_variable and that is equated to the overall_system_interpretation variable (**1060**). However, if the string_1_system_interpretation is not empty of characters, (**1020-N**), the string intermediate variable is and the string_1_system_interpretation variable separated by appropriate spaces. A check is then made to see if the string_2_system_interpretation variable is empty of characters (**1040**). If it is, the overall_system_interpretation variable is set equal to the string_intermediate variable and the process returns. If it is not (**1040-N**), the string intermediate variable is supplemented with the operator 2 text and the system_2_system_interpretation variable, separated by appropriate spaces. The subprocess identified by blocks **1040** and **1050** then is repeated for each of the remaining text fields.

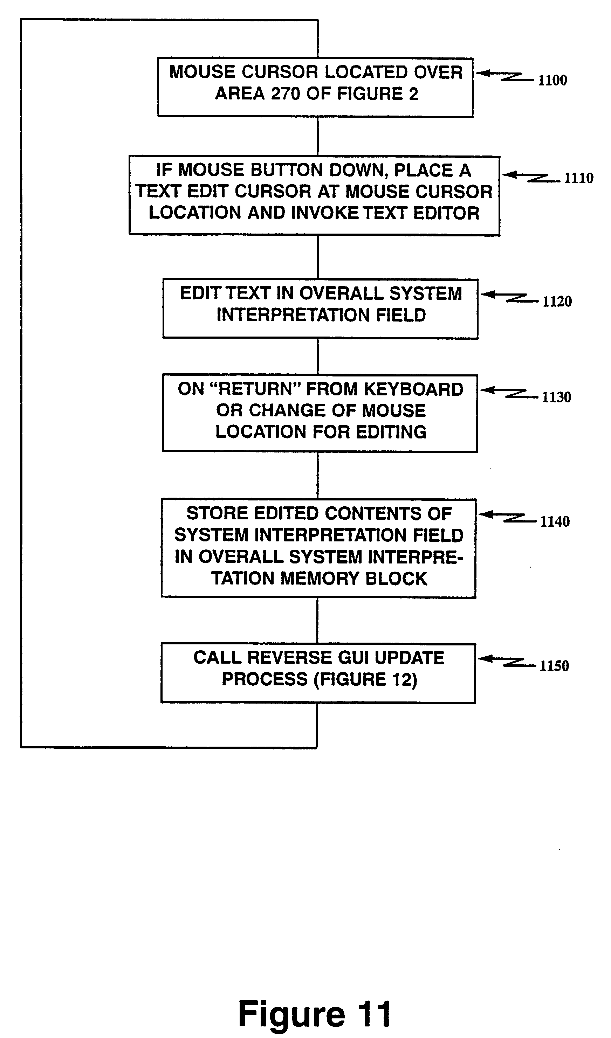

**Figure 11** is an exemplary process for reverse system interpretation. Reversing the system interpretation involves taking the overall system interpretation displayed in area **270** of **Figure 2** and reversing the process so that the text fields contain the constituent parts from which the overall system interpretation was made. Thus, if a user wishes to edit an overall system interpretation field, the changes made to the overall system interpretation field will be reflected in the search strings and in the operator selected automatically. When a mouse cursor is detected to be located over **270** of **Figure 2** (**1100**), if the mouse button is depressed, a text edit cursor will be placed at the location of the mouse cursor and a text editor invoked (**1110**). The user can then edit text in the overall system interpretation field (**1120**). Upon receiving a "return" from the keyboard or upon a change of mouse location for editing (**1130**), the stored edited contents of the system interpretation field **270** are stored in the overall_system_interpretation memory block **440** (**1140**) and the call reverse GUI update process of **Figure 11** is called (**1150**) and the process repeats.

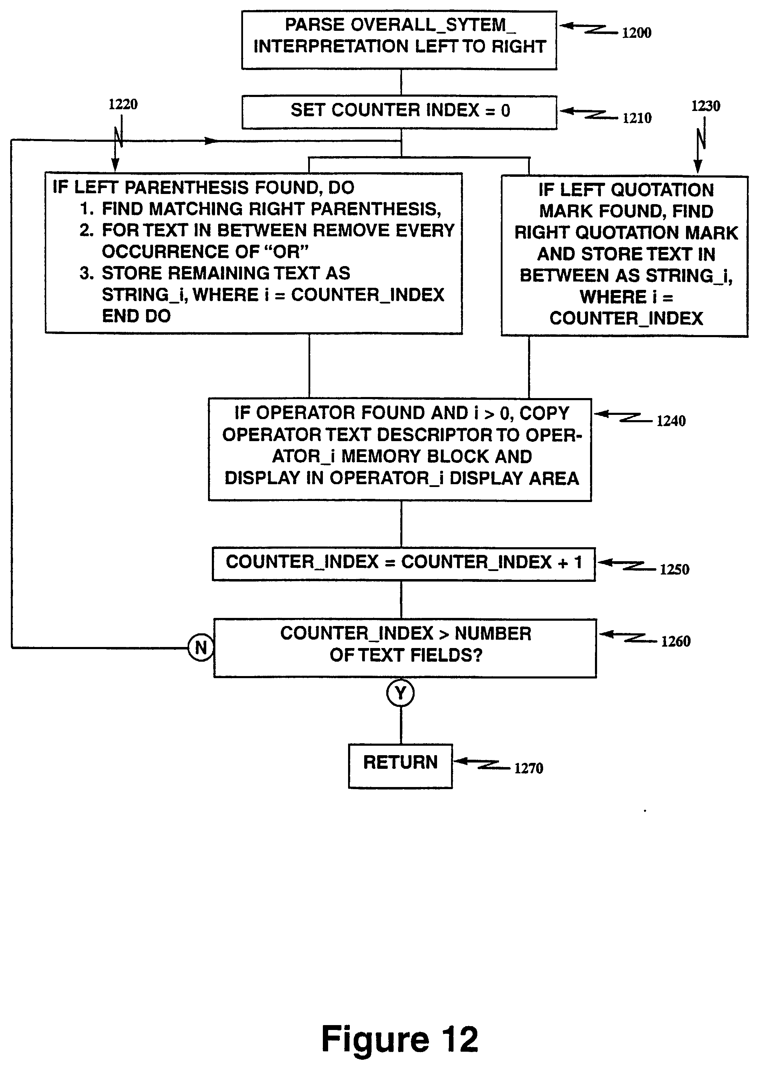

**Figure 12** is a flow chart of a process for converting an overall_system_interpretation into its constituent parts in the graphical user interface (reverse GUI update) for use in the process of **Figure 11**.

The text in the overall_system_interpretation variable is parsed from left to right (**1200**) and a counter_index is set to 0 (**1210**). As the text in the overall_system_interpretation variable is scanned, if a left parenthesis is found, a process is undertaken by which a matching right parenthesis is sought and for the text in between a left and right parenthesis, every occurrence of the text string "OR" is removed together with any excess spaces. The text remaining after the removal is stored as string_I_system_interpretation, where I is the value of the counter index. Thus, if string_I_system_interpretation was interpreted as a "match any one word" string, as it would be if it were surrounded by parentheses, the text is restored to its original condition.

If, when string_I_system_interpretation is scanned, a left quotation mark is found, a corresponding right quotation mark will be found and the text in between stored as string_I, where I is the counter_index (**1230**). This deals with a case when the string_I has been interpreted as a literal.

If, during the scanning of the string_I_system_interpretation variable, an operator is found and I is greater than 0, the operator text descriptor will be copied to the operator_I memory block and will be displayed in the operator_I display area of the graphical user interface (**1240**). The counter_index is then incremented (**1250**) and if the counter_index is greater than the number of text fields, after incrementing (**1260**), the process returns (**1270**). If it is not, (**1260-N**), the process returns to before block **1220**. In this way, as the string_I_system_interpretation information is scanned, a search is progressively undertaken until either a parenthetical or a literal is found, a check will be made for the corresponding operator and the appropriate text stored in the respective variables and progressive and successive text fields considered until all text fields and operators have been located.

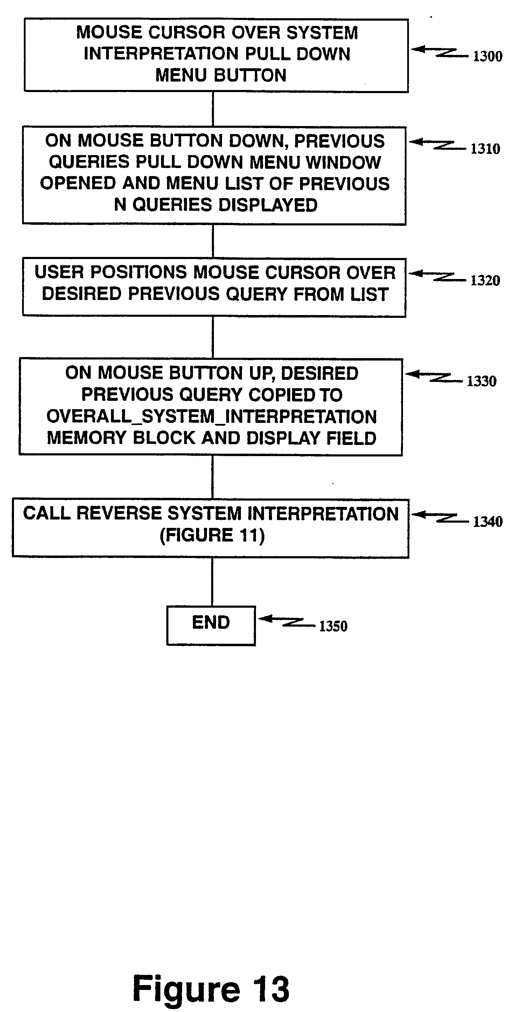

**Figure 13** is a flow chart of a process used to display a pull down menu of N previous queries presented to the search system. If the mouse cursor is located over the system interpretation pop-up menu button (**1300**), on mouse button down, a window is opened and a menu list of the previous inquiry is presented to the search system are displayed (**1310**). If the user positions a mouse cursor over a desired previous query from the list (**1320**), on mouse button up, the desired previous query is copied to the overall_system_interpretation memory block and is displayed in the display field 270 (**1330**). At that point, the reverse system interpretation process of **Figure 11** is called (**1340**) and the process ends (**1350**).

**Figure 14** is a flow chart of an exemplary process for submitting a search request using a graphical user interface in accordance with the invention.

When a mouse cursor is positioned over the "find" button (**1400**), when a mouse button is depressed, a command "scope =" concatenated with the scope_string contents is sent to the system (**1410**). If the "match case" flag is set, a "match case" directive is sent to the search system (**1420**). The overall system interpretation string is then sent as the actual query to be processed (**1430**). The contents of the overall_system_interpretation_string are simultaneously stored in the last N query's list **480** of **Figure 4** (**1440**) and the process ends (**1450**).

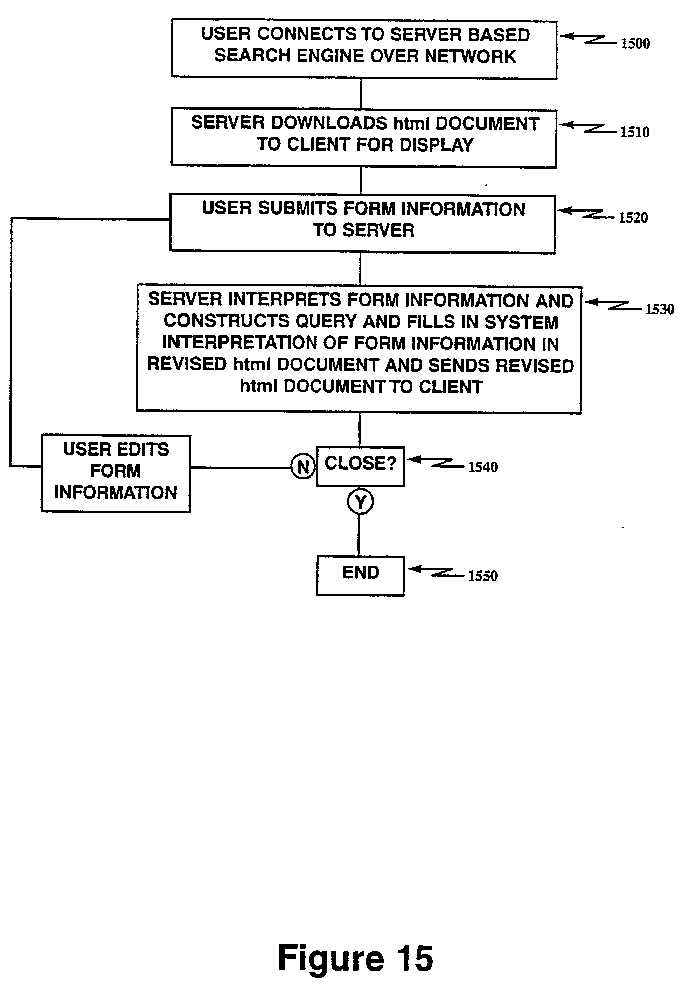

**Figure 15** is a flow chart of an exemplary process for showing how an html document can be used instead of an applet to initiate a search at a server process from a client process. When the user connects to a server based search engine over the network (**1500**), the server downloads an html document to the client process for display (**1510**). Hypertext Mark Up Language (html) contains functionality which permits an easy design of forms and the passing of form information to a server. Hypertext Markup Language (html) is utilized to publish a variety of documents, typically for use on the World Wide Web, while permitting functionality to be included within the document. For example, certain words within the document can be linked to particular address locations within the World Wide Web (or other network) where more information relating to that term resides.

Html provides a set of codes. When these codes are inserted into a text document, they instruct a process such as a Web browser both how to display the document and what to do when "hot" links are selected (or clicked). Html describes how a document is structured, not precisely how it should be displayed. Because HTML deals with structure instead of appearances, different programs running on different types of computers handle the same html codes differently, but they do so in a manner that is consistent with the intentions behind the codes. HTML documents consist of plain text mixed with codes. The <FORM> command is utilized to identify a form description block of text.

With the form displayed, the user can enter data and then pass it to the server upon clicking a "submit" button (**1520**). The server interprets the form information, constructs the search query and creates a system interpretation of the form information. The system interpretation string can then later be filled in in a revised html document which is then sent to the user to replace the previous document or can be displayed together with search results (**1530**). If the user clicks the close button (**1549-Y**), the process ends (**1550**). If the user does not choose the close button (**1540-N**), the user may edit the form information and again submit the form to the server (**1520**).

In this way, a search graphical user interface has been disclosed which overcomes the problems of the prior art and permits ready and convenient access to search queries by both inexperienced and experienced users while retaining the entire functionality of both graphical user interfaces and single string based search systems.

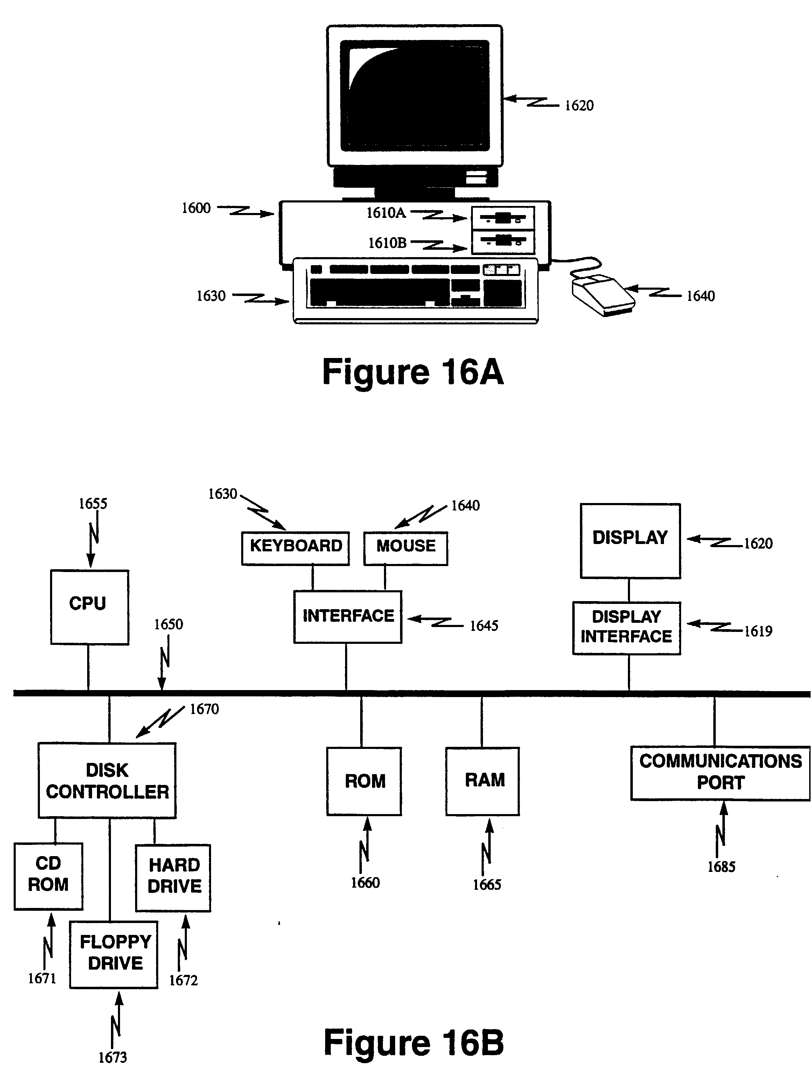

**Figure 16A** illustrates a computer of a type suitable for carrying out the invention. Viewed externally in **Figure 16A**, a computer system has a central processing unit **1600** having disk drives **1610A** and **1610B**. Disk drive indications **1610A** and **1610B** are merely symbolic of a number of disk drives which might be accommodated by the computer system. Typically, these would include a floppy disk drive such as **1610A**, a hard disk drive (not shown externally) and a CD ROM drive indicated by slot **1610B**. The number and type of drives varies, typically, with different computer configurations. The computer has the display **1620** upon which information is displayed. A keyboard **16160** and a mouse **1640** are typically also available as input devices. Preferably, the computer illustrated in **Figure 16A** is a SPARC workstation from Sun Microsystems, Inc.

**Figure 16B** illustrates a block diagram of the internal hardware of the computer of **Figure 16A**. A bus **1650** serves as the main information highway interconnecting the other components of the computer. CPU **1655** is the central processing unit of the system, performing calculations and logic operations required to execute programs. Read only memory (**1660**) and random access memory (**1665**) constitute the main memory of the computer. Disk controller **1670** interfaces one or more disk drives to the system bus **1650**. These disk drives may be floppy disk drives, such as **16716**, internal or external hard drives, such as **1672**, or CD ROM or DVD (Digital Video Disks) drives such as **1671**. A display interface **1619** interfaces a display **1620** and permits information from the bus to be viewed on the display. Communications with external devices can occur over communications port **1685**.

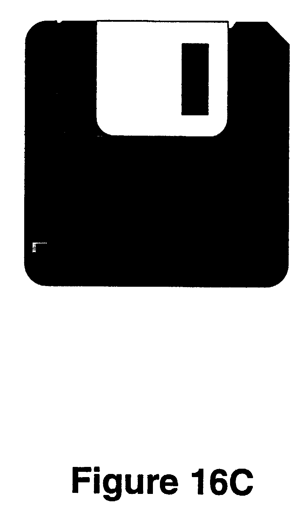

**Figure 16C** illustrates an exemplary memory medium which can be used with drives such as **16716** in **Figure 16B** or **1610A** in **Figure 16A**. Typically, memory media such as a floppy disk, or a CD ROM, or a Digital Video Disk will contain the program information for controlling the computer to enable the computer to perform its functions in accordance with the invention.

In this disclosure, there is shown and described only the preferred embodiment of the invention, but, as aforementioned, it is to be understood that the invention is capable of use in various other combinations and environments and is capable of changes or modifications within the scope of the inventive concept as expressed herein.

## Claims

1. Apparatus for carrying out a search of a database, comprising:
a. a computer, having a search process for searching said database, configured to send a graphical user interface to a user device, said graphical user interface including text entry and/or operator components and a single string interpretation of a text query formulated using said components of said graphical user interface; and
b. a user device, including a display, connected to said computer for displaying said graphical user interface.

2. Apparatus of claim 1 in which said user device is a computer and the graphical user interface is sent to said user device as an applet.

3. Apparatus of claim 1 in which said user device is a computer and the graphical user interface is sent to said user device as an html document.

4. Apparatus of claim 3 in which said html document implements text entry using an html <FORM> or <FRAME> command.

5. Apparatus of claim 1 in which said user device is a computer configured to edit said single string interpretation of a text query and to reflect changes in the single string interpretation back to the components of the graphical user interface which resulted in the single string interpretation.

6. Apparatus of claim 1 in which said graphical user interface includes a scope of search pull down menu.

7. Apparatus of claim 1 in which said graphical user interface includes a pull down menu containing a list of single string interpretations previously submitted to said computer.

8. Apparatus of claim 7 in which selection of a single string interpretation from said list results in display of that interpretation and the contents of that interpretation are used to change the components which resulted in that interpretation.

9. A computer implemented method of composing a search query, comprising the steps of:
a. displaying a graphical user interface containing text entry fields and operator selection menus;
b. converting contents of the text entry fields and operators selected from said operator selection menus into a system interpretation for display to a user of how the system interprets any entries in the text entry fields and operator selections.

10. The method of claim 9 in which the system interpretation displayed can be edited.

11. The method of claim 10 in which editing of the system interpretation results in corresponding changes in the contents of the text entry fields.

12. The method of claim 10 in which editing of the system interpretation results in corresponding changes in the operators selected.

13. In a system for providing text searches over a network, having at least one search computer providing search services, connected to the network and at least one user terminal connected to said network and configured to connect to a search computer, the method comprising the steps of :
a. downloading a graphical user search interface from a search computer to a user terminal; and
b. using the graphical user search interface to initiate searches on said search computer and receive results from said search computer.

14. A system for providing text searches over a network, comprising:
a. a search computer connected to said network, configured to download a graphical user search interface to a user terminal, and
b. at least one user terminal configured to receive said graphical user search interface and to use it to initiate searches on said search computer.

15. The system of claim 14, in which the graphical user interface includes a single string interpretation of a text query formulated using text and operator components of said graphical user interface.

16. A computer program product comprising:
a. a memory medium; and
b. a computer program, stored on said memory medium, said computer program comprising instructions for displaying a graphical user interface containing text entry fields and operator selection menus, and converting contents of the text entry fields and operators selected into a system interpretation for display to a user of how the system interprets any entries in the text entry fields and operator selections

17. A computer program product of claim 16 in which said computer program comprises instructions for editing a system interpretation and for reflecting changes from editing into the text entry fields and operators.

18. In a system for providing text searches over a network, having at least one search computer providing search services, connected to the network and at least one user terminal connected to said network and configured to connect to a search computer, a program product comprising:
a. a memory medium; and
b. a computer program, stored on said memory medium, said computer program comprising instructions for downloading a graphical user search interface from a search computer to a user terminal and instructions for executing said graphical user search interface at said user terminal to initiate searches at said search computer from said user terminal.

19. Use of a client computer system displaying a graphical user interface (GUI) downloaded from a server, to carry out a search, wherein the GUI includes search word entry regions (200) and programming controls (210,230) for selecting logical search combinations of the search words entered in the word entry regions (200), and is **characterised by** means responsive to the settings of the programming controls to provide a display (270) of the system's interpretation of the selected logical search combinations in respect of search words entered in the search word entry regions.
